Europäisches Patentamt

European Patent Office

Office européen des brevets

(19)

(11) Publication number: **0 135 357**
A2

(12) # EUROPEAN PATENT APPLICATION

(21) Application number: 84305473.5

(22) Date of filing: 10.08.84

(51) Int. Cl.⁴: **B 01 J 8/06**
//C07C5/25, C07C5/333,
C10G11/00, C10G35/00

(30) Priority: 11.08.83 GB 8321640

(43) Date of publication of application:
27.03.85 Bulletin 85/13

(84) Designated Contracting States:
BE DE FR GB IT NL

(71) Applicant: DAVY McKEE (LONDON) LIMITED
250, Euston Road
London NW1 2PG(GB)

(72) Inventor: Duhan, James Bernard
15 Cromwell Road
Beckenhan Kent BR3 4LP(GB)

(72) Inventor: Al-Muddarris, Ghazi Rashid
"Blue Haze" Wotton Way
Cheam Sutton Surrey(GB)

(74) Representative: Eyles, Christopher Thomas et al,
BATCHELLOR, KIRK & EYLES 2 Pear Tree Court
Farringdon Road
London, EC1R 0DS(GB)

(54) Reactor.

(57) A multi-tubular fired reactor for endothermic catalytic reactions is described including a furnace whose firebox is divided into a series of zones, each of which has its own individually controllable burner system. At any given moment a majority of the tubes can be "on line" whilst a minority are in the course of reactivation. By sequentially switching the zones from "on line" status to reactivation and vice versa, a substantially constant product composition can be maintained in a common outlet product collection system to which all the tubes are connected.

EP 0 135 357 A2

0135357

-1-

REACTOR

This invention relates to a reactor for use in conjunction with endothermic catalytic processes, particularly such processes that require high operating temperatures and require periodic regeneration of the catalyst.

Dehydrogenation of alkanes to form olefins is an example of an endothermic high temperature catalytic process. Reverse isomerization of internal olefins to terminal olefins (e.g. reverse isomerization of butene-2 to butene-1), catalytic reforming of hydrocarbons, e.g. naphthenes and paraffins, and catalytic cracking of hydrocarbons are further examples of endothermic catalytic reactions. In each case periodic regeneration of the catalyst is necessary due to deposition of carbonaceous deposits on the catalyst surface. Such deposits can be removed in any convenient manner, typically by oxidation with air, usually admixed with a diluent such as nitrogen or steam, or with oxygen/diluent mixtures. Such regenerative techniques usually involve exothermic reactions.

These reactions are but a few examples of endothermic catalytic processes.

Since these processes are endothermic it is necessary to supply heat to the reactants to enable the desired reaction to proceed. One approach is to preheat the reactants to a temperature in excess of the threshold temperature for the reaction (often considerably in excess of the threshold temperature), prior to contact of the reactants with the catalyst. As the reaction proceeds, the reactants are cooled due to the endothermic nature of the reaction. Quenching of the reaction may occur if the inlet temperature to the catalyst bed is not high enough. However, the use of high inlet temperatures is usually disadvantageous as side-reactions may often occur. Usually after a period of operation the catalyst activity becomes too low for continued operation so that regeneration is necessary. In this case the reactant flow is switched to a fresh catalyst bed whilst the original bed is regenerated and reheated by burning off the carbonaceous deposit. During regeneration the carbon oxides-containing regeneration flue gases are generally vented.

External heating of the catalytic reaction zone is also possible. However this generally means that the capital cost of the reactor is increased. As regeneration is necessary it is necessary to duplicate the reactors.

An example of a prior art design of reactor is to be found in U.S. Patent Specification No. 2289922.

More recently there has been proposed an alkane dehydrogenation process using a multi-tubular reactor (see British Patent Specification No. 2104094A). This process uses a multi-tubular fired reactor with the tubes arranged in groups and with each group of tubes having a common header provided with means to control the flow of reactants to that group of tubes. As therein disclosed, regeneration can be accomplished in a minority of the groups of tubes whilst the remaining tubes are "on stream". This process has the advantage that, instead of requiring, as did the prior art process, two or more full sized reactors operated in an intermittent mode in which one of the reactors is at any time off line being regenerated or on standby, it is possible to operate in an effectively continuous manner a single reactor which is only a fraction larger than the effective "on stream" size of the reactor. This represents significant capital savings whilst offering the plant operator considerably simpler operation than prior art designs and the possibility of continuous, rather than intermittent, operation.

The present invention seeks to provide an improved reactor design suitable for continuous operation of endothermic catalytic processes, such as the alkane dehydrogenation process described in the afore-mentioned British Patent Specification No. 2104094A.

According to the present invention there is provided a reactor for continuous operation of an endothermic catalytic process in which the catalyst requires periodic reactivation comprising:

firebox means defining a furnace firebox comprising a series of firebox zones;

a plurality of catalyst containing tubes extending through each firebox zone;

inlet header means corresponding to each firebox zone and connected to the inlet end of each tube of that firebox zone for the admission of a reactant or reactants, on the one hand, in a production part of the operating cycle and for the admission of a reactivation medium, on the other hand, in a reactivation part of the operating cycle;

reactant supply means for supplying one or more reactants to the catalyst containing tubes;

reactivation medium supply means for supplying reactivation medium to the catalyst containing tubes;

individually operable flow control means corresponding to each firebox zone for controlling the supply of reactant or reactants, on the one hand, and of reactivation medium, on the other hand, to the tubes of that firebox zone;

product collection means connected to the outlet ends of the tubes for collecting in a common outlet stream material exiting tubes of all the zones

0135357

-4-

including both tubes which are at any given time in a production part of the operating cycle and tubes which are in the reactivation part of the operating cycle;

firebox burner means corresponding to each firebox zone for heating the tubes thereof;

fuel supply means for supplying fuel to each firebox burner means;

combustion air supply means for supplying combustion air to each firebox zone; and

individually operable fuel supply control means corresponding to each firebox zone for controlling the supply of fuel to the firebox burner means thereof;

whereby, in use, the reactor may be continuously operated in a sequential pattern of operation in which, at any given time, reactant or reactants is or are supplied to the tubes of at least a majority of the firebox zones in a production part of the operating cycle for such zones, whilst reactivation medium is simultaneously supplied to the tubes of at most a minority of the firebox zones in a reactivation part of the operating cycle for such zone or zones, the rate of fuel supply to the individual firebox zones being individually controllable so as to provide the requisite heat input thereto during the reactivation and production part of the respective operating cycle for each zone; and

whereby the catalyst in the tubes of each firebox zone can be subjected alternately to reactivation conditions and to production conditions, the maximum ratio of the number of tubes throughout the reactor at a given time in the reactivation part of their respective operating cycles to the number of tubes throughout the reactor at that time in the production part of their respective cycles being selected in dependence on the rate of deactivation of the catalyst under the chosen production conditions.

In such a reactor the tubes are preferably all of the same cross-sectional area and contain substantially identical amounts of catalyst. If tubes of differing cross-sectional area are used, then these are preferably arranged so that the tubes of each firebox zone together contain a substantially constant amount of catalyst and exhibit together a substantially constant pressure drop.-

The invention thus provides a reactor of the specified kind which includes a firebox or fireboxes divided into a series of individually operable zones, typically from 3 to about 24 firebox zones, each having its own burner means supplied with fuel from a suitable supply and with air for combustion, valve means being provided in the fuel supply to the burner means of each zone so as to permit variation of the heat input with time to that zone, each zone having a plurality of catalyst containing tubes extending therethrough all of which are connected by their inlet ends to a common inlet header for that zone, the outlet ends for the tubes of all zones being connected to a common product collection system, and the tubes of each zone further being connectable in a sequential pattern of operation in turn to a supply of reactivation medium in a reactivation part of the operating cycle for that zone and to a reactant supply for supply of reactant or reactants in an operating part of the cycle for that zone, the tubes of at least the majority of the zones at any one time being in the operating part of their respective operating cycles, whilst at most a minority only of the tubes of the reactor are in the reactivation part of their respective operating cycles.

A preferred method of operation comprises supplying reactant or reactants to the tubes of the majority of the firebox zones, whilst simultaneously reactivating the catalyst in the tubes of a minority of the firebox zones, the tubes of that minority of firebox zones being brought back "on line" after reactivation, a further corresponding number of firebox zones being at the same time switched to the reactivation mode. In this way each firebox zone is operated cyclically but with the operating cycles of the various firebox zones being out of phase one with another.

When the period required for reactivation of the catalyst under particular operating conditions is short compared with the "on line" period between successive reactivations, another method of operation comprises operating all the firebox zones "on line" for a period but then reactivating the catalyst of the tubes of one of the firebox zones, or of at most a minority of the firebox zones, whilst maintaining the remainder "on line". After each reactivation period the tubes of all the firebox zones are brought back "on line" until reactivation of the catalyst of the next firebox zone or zones is required. Although this alternative method of operation will give rise to variations in composition of the outlet stream, these variations may be acceptable to a plant operator.

Normally the reactant or reactants will be admixed with an inert diluent, such as steam or nitrogen. Typical reactants include alkanes, e.g. n-butane (in the case of steam dehydrogenation), internal olefins, e.g. butene-2 (for reverse isomerization), or naphthenes or paraffins (for catalytic reforming or cracking processes). The catalysts used may be conventional catalysts for such processes.

In a particularly preferred embodiment of the invention an inlet portion of each of the tubes within the corresponding firebox zone is devoid of catalyst so as to provide a preheating tube portion upstream from the catalyst bed of that tube. This preheating tube portion can be empty but is preferably packed with an inert solid medium, conveniently having a similar physical size and shape to the catalyst packing, in order to improve the heat transfer rate to the reactant or reactants. In this way the reactant or reactants can be supplied to the inlet ends of the tubes at a temperature below the threshold temperature for the endothermic catalytic reaction and then rapidly brought to reaction temperature in such inlet portion of the tube before entering the catalyst bed. Typically the length of the preheating tube portion is from about 20 to about 35% of the length of the catalyst bed of that tube. By this means the reactant or reactants is or are brought up to reaction temperature much more quickly than in conventional equipment designed for endothermic catalytic processes which uses a separate preheater to bring the reactant or reactants to a temperature higher than the threshold temperature; the use of such preheaters inevitably extends the residence time of the reactant or reactants at elevated temperature away from the catalyst and increases the risk of loss of selectivity through cracking and other side reactions, such as polymerisation. If a preheating tube portion is provided upstream from the catalyst bed of a tube, the necessary final preheat from an intermediate temperature at which little or no cracking or other side reactions occur to the desired reaction temperature can be carried out with a residence time typically of from about 0.1 to about 0.2 seconds. In conventional equipment, using a separate preheater, the typical residence time in the separate preheater and associated transfer pipework prior to contact with catalyst is typically from about 1.5 to about 3 seconds. Thus by using this preferred feature of the invention the residence time of the feedstock at reaction temperatures away from the catalyst can be reduced by a factor of between about 10 and about 20 and hence the risk of loss of selectivity due to side reactions is correspondingly reduced.

It is further proposed that the reactor shall preferably include:

preheater means defining a preheater section comprising a plurality of preheater zones, each corresponding to a respective firebox zone;

a plurality of preheater coils, each in a respective preheater zone and connected to the inlet header means of the corresponding firebox zone;

preheater burner means corresponding to each preheater zone for heating the preheater coil thereof;

subsidiary fuel supply means for supplying fuel to the preheater burner means of each preheater zone;

preheater combustion air supply means for supplying combustion air to the preheater zones; and

individually operable preheater fuel supply means for controlling the supply of fuel to each preheater zone for regulating the heat input to the respective preheater coil.

The purpose of the preheater coils is to raise the temperature of the medium flowing therethrough, whether this be the reactant or reactants, or the reactivation medium, in either case possibly admixed with a diluent, or whether this be an inert medium, such as steam or nitrogen, to an appropriate temperature. Normally this temperature will be less than the desired entry temperature to the catalyst bed and final heating is achieved in the upstream end of the tubes in the respective firebox zone ahead of the catalyst charge

-9-

thereof.

Conveniently the reactivation medium supply means is arranged to supply reactivation medium required for reactivation of the catalyst of the selected firebox zone or zones to the upstream end of the corresponding preheater coil.

The nature of the reactivation medium will be dependent upon the nature of the catalyst deactivation and the reactions required to reactivate the catalyst. In cases where carbonaceous deposits must be removed from the catalyst during reactivation, air or oxygen-enriched air may typically be used, usually in admixture with a diluent such as steam. Under some circumstances, steam can be used itself as reactivation medium. Other media that can be used for reactivation include $CO_2$ and $H_2$ and mixtures thereof with a diluent such as steam. Nitrogen is another example of an inert diluent.

By providing individually operable firebox zones and preheater zones the heat input to which can be varied with time so as to correspond to the heat requirements of the respective operating cycle for the tubes of each zone, the temperature of the tubes themselves can be controlled so as to prevent overheating and hence to minimise the risk of catalyst damage and/or tube failure. As the reactivation part of the operating cycle is exothermic, the heat requirement of the firebox zone during this part of the cycle is much less than during the production part of the cycle during which the heat input has to be increased to maintain the catalyst temperature, due to the endothermic nature of the process. Hence the fuel supply rate to each firebox zone is significantly reduced during the reactivation part of the respective operating cycle. At any given time the majority of the tubes can be "on line", with only a minority of the tubes undergoing catalyst reactivation or in a bridging regime, that is to say a regime in which reactants are being purged prior to admission of reactivation medium. The proportion of tubes in the reactivation part of their cycle at any given time compared to the proportion of tubes "on line" in the operating part of their cycle can be selected in dependence on the rates of catalyst deactivation and of catalyst reactivation so as to maximise the efficiency of operation of the reactor. By arranging for the number of tubes being reactivated at any given time to be minimised, the proportion of "on line" tubes can be maximised, thus maximising the efficiency of utilisation of the reactor. As there are three or more firebox zones, typically from 4 to 12 firebox zones (e.g. from 6 to 12 firebox zones), but usually not more than about twenty four firebox zones, and as only a small proportion of tubes usually require reactivation at any one time (for example from about one twenty fourth up to one third of the tubes, typically about one quarter to about one twelfth of the tubes, require reactivation at any one time), the reactor of the invention offers significant capital cost savings over prior art designs. For example, if catalyst deactivation and reactivation studies show that 10% of the tubes require to be under reactivation or in the bridging regime at any given time, then it is necessary, for continuous extended operation of the reactor, to provide 110% of the theoretical number of tubes required for a given short term throughput. (By the phrase "extended term" we mean a period that is a multiple of the time between successive periods of reactivation, while the term "short term" refers to a period shorter than the time between successive periods of reactivation). In prior art designs, on the other hand, in which a pair of identical reactors are provided, each of 100% design capacity, the catalyst of one of which is being reactivated whilst the other is "on line", such designs require complete duplication of reactor equipment, i.e. 200% of design capacity, rather than a modest 10% or so of extra reactor equipment as required by the design of the invention. Moreover, as the overall reactor capacity is smaller for that of the invention, compared with the prior art design, corresponding savings in the catalyst inventory can be achieved and more effective use can be made of this catalyst inventory. In addition, as the gases produced during reactivation are mixed in with the product stream it is unnecessary to provide separate ducting and other equipment to handle the reactivation product gases separately from the process products. Again this represents a further saving in capital costs compared with prior art designs in which the gases generated during reactivation are vented. Hence significant capital cost savings can be achieved overall with the reactor of the invention. In addition, as the firebox zones are each at different stages of their cycles at any given time and are sequentially reactivated and then brought back "on line" again, there is always the same number of tubes whose catalyst has just been reactivated, the same number of tubes whose catalyst is due for reactivation, and the same number of tubes whose catalyst is at an intermediate stage. Thus the average degree of catalyst deactivation, taken over the reactor as a whole, remains substantially constant and undergoes only relatively minor fluctuations. Hence the composition of the product stream at the outlet end of the reactor remains substantially constant at all times and is not subject to large variations. In contrast, there is a likelihood of a significant change in product composition in a two reactor system of the prior art as the reactant flow is switched from a reactor with a significantly deactivated catalyst charge to a reactor with a freshly reactivated catalyst charge.

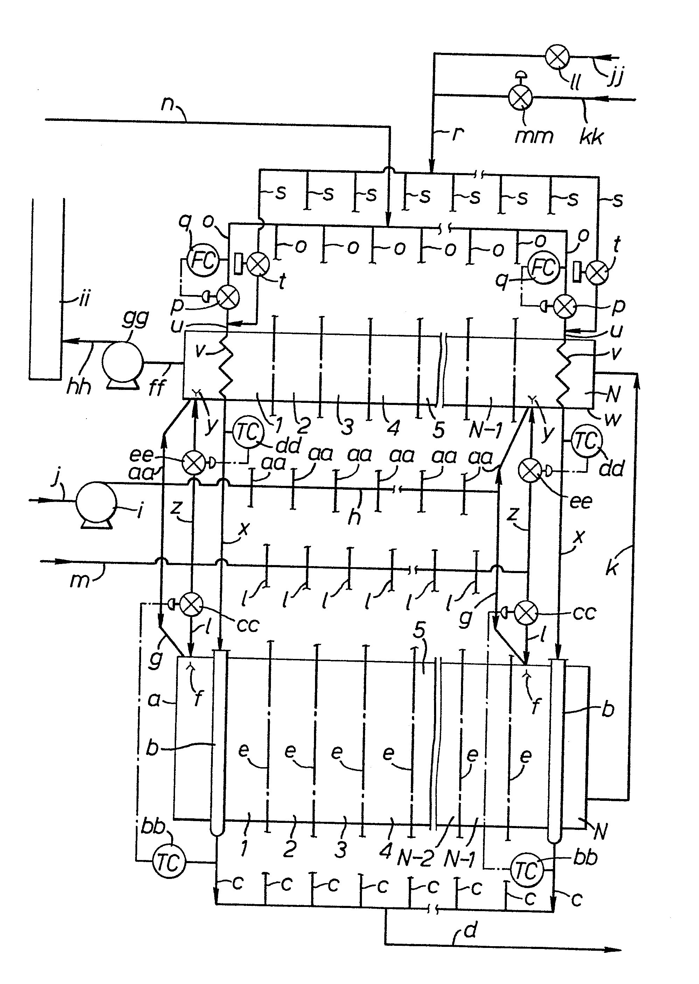

In order that the invention may be clearly understood and readily carried into effect a preferred embodiment will now be described, by way of example only, with reference to the accompanying drawing which is an outline flow diagram of an alkane dehydrogenation reactor constructed in accordance with the invention.

Referring to the drawing, the illustrated reactor comprises a furnace firebox $a$ divided into a number of firebox zones and having a number of vertical catalyst-filled tubes $b$, arranged for example in rows, mounted therein. For the sake of simplicity, only two tubes $b$ are illustrated, but it will be understood by the skilled reader that in practice there would be any suitable number of tubes in each firebox zone and that these would be arranged in any suitable configuration. All the tubes $b$ of a given zone are connected to a common inlet header and the exit ends of all of the tubes in firebox $a$ are connected to a common product collection system. Conveniently the tubes in each row are connected to a common outlet header $c$, each of which is in turn connected to a common effluent line $d$. Within firebox $a$ the furnace zone is (as already mentioned) divided into N individual zones, indicated in the drawing by the reference numerals 1 to 5, ....N-2, N-1 and N. Usually N is between 3 and 24, and is typically in the range 6 to 12 e.g. 8. The individual zones are conveniently divided one from another by internal walls or screens (indicated generally at $e$), made of a suitable refractory material. The skilled reader will, however, appreciate that by suitable design of the firebox and positioning of the burners $f$ it may

-13-

be possible to omit walls or screens e.

Corresponding to each of the zones 1 to N there are provided one or more respective burners f, conveniently mounted in the arch of the firebox a. Air for combustion is supplied to each zone or burner f by way of a corresponding line g fed by a combustion air fan i drawing in air through air inlet j. Flue gas from each zone is passed to a common flue gas line k. Fuel gas is supplied to burners f of each zone by way of a corresponding header l fed in turn by fuel gas main m.

The reactant feed stream, i.e. a mixture of an alkane, such as n-butane, and steam, is supplied in line n to a number of feed lines o, one corresponding to each of zones 1 to N, the rate of flow of reactant feed through each feed line o being controlled by a respective valve p which is coupled to a corresponding flow controller q.

Reactivation medium for catalyst reactivation is supplied to the reactor from reactivation medium main r to individual feed lines s, the flow through which is determined by corresponding valves t. This reactivation medium consists of a mixture of steam, supplied in a steam main jj, and air or oxygen, supplied in line kk. The flow rate in each of lines jj and kk is controlled by corresponding valves ll and mm.

The feed to the tubes b of each zone 1 to N of the firebox a is by way of corresponding lines u, preheating coils v mounted in a preheating furnace w, and lines x which lead to the inlet headers supplying the corresponding tubes b. Preheating furnace w is similarly provided with a plurality of preheating zones 1 to N, each provided with one or more burners y which are fed with fuel from fuel main m by way of lines z. Air for combustion is supplied by way of lines aa from combustion air main h.

-14-

The temperature of each individual zone 1 to N in firebox $a$ is controlled by means of a corresponding temperature controller $bb$ which senses the exit temperature from the tubes $b$ of each zone and controls the flow of fuel to the burners $f$ by acting on the relevant valve $cc$. In a similar way the temperature in each zone 1 to N of preheating furnace $w$ can be controlled by means of corresponding temperature controllers $dd$ acting on valves $ee$ in lines $z$ that supply fuel to the individual zones 1 to N.

For the purpose of heat recovery the exhaust gases from firebox $a$ are passed via line $k$ to the preheating furnace $w$. The flue gases exiting preheating furnace $w$ are drawn by way of line $ff$, possibly through a heat recovery section of conventional design (not shown), by means of flue gas fan $gg$ and thence by line $hh$ to stack $ii$.

In one mode of operation of the illustrated reactor reactant medium, i.e. an alkane/steam mixture, is fed to the tubes $b$ of M zones, that is to say a majority of the zones of the firebox $a$, whilst the remaining (N-M) zones are supplied with reactivation medium (i.e. an oxygen/steam or air/steam mixture). Thus if, for example, pilot or laboratory scale experiments have shown that a charge of the catalyst requires reactivation after 7 hours and that reactivation of that charge takes 1 hour, then there may be 8 zones in firebox $a$, and the tubes of 7 of these zones may be "on stream" at any given time whilst the tubes of the eighth zone are being reactivated. The ratio between the numbers of zones "on stream" and those in which the catalyst is undergoing reactivation will depend upon the activity of the catalyst, the rate of deactivation, and the rate of reactivation. These factors can readily be determined by trial in a laboratory scale reactor for a particular catalyst and for the selected operating conditions. From the results of such experiments the skilled reader can readily calculate for a given plant what will be the optimum number of zones to provide in firebox a and what will be the optimum ratio between the numbers of zones "on stream" and undergoing reactivation.

When reactivation is completed the relevant zone or zones is or are put back "on stream" and the catalyst in the tubes of another zone or zones is or are reactivated. Thus the illustrated reactor operates upon a sequential basis, with the zones following simultaneous but independent respective reactivation cycles interspersed between periods of "on stream" operation. As the number of tubes at any one time in an immediate post-reactivation state remains constant, as do the corresponding numbers of tubes in a state requiring reactivation and in intermediate states respectively, the average state of deactivation of the catalyst in all the "on stream" tubes remains constant. Hence there is relatively little variation in composition of the product stream in line d.

As it is undesirable to switch directly from the feed reactant stream to the reactivation medium, it will usually be prudent to arrange for a period of steam purging of the tubes b before and after each period of regeneration. Such steam is supplied from steam main jj to the lines u. In view of the tubular design of the reactor, the gas flow through each tube is effectively plug flow so that a few seconds usually suffices for steam purging. Steam can also be passed through the tubes of any firebox zone that is for any reason on standby duty.

As the illustrated reactor permits the plant operator to achieve precise control of temperature and other reaction conditions (such as space velocity and temperature), it permits operation with optimal selectivity to the desired product or products. Moreover as the residence time at high temperatures away from the catalyst is minimised, the deposition of carbon and other side reactions are minimised.

The degree of deactivation of the catalyst in a particular zone can be assessed by analysis of the product stream in the appropriate line c, using for example an infra-red spectrophotometric method. This information can be used to modify the rate of fuel supply to the burners f so as to raise the exit temperature to compensate for catalyst deactivation or to initiate the reactivation procedure for a deactivated zone. From the pilot scale experiments referred to earlier, the rate of carbon laydown during the "on-stream" period of the catalyst and the carbon concentration on the catalyst at the end of the "on- stream" period can be determined. From this information and a knowledge of the thermal inertia of the various parts of the reactor, it is possible to predict the catalyst temperature profile and its time dependence down the catalyst filled tubes during the reactivation, for various flowrates of oxygen and reactivation medium diluent (typically steam). This analysis enables the oxygen and diluent flowrates to be controlled in such a manner that the time for reactivation is minimised without risk of damage to either catalyst or tubes due to excessively high temperature. Conveniently an oxygen detector can be used to monitor the presence of oxygen in each of outlet headers c and hence detect when reactivation has been completed, at which time slippage of reactivation medium from the corresponding tubes b will begin.

The reactivation conditions used will depend upon the degree of carbon laydown on the catalyst and the nature of the diluent. In a typical alkane dehydrogenation reactor constructed according to the invention, a mixture of steam and air can be used as the reactivation medium, the oxygen concentration being increased progressively from a typical initial value of about 0.2% by volume as carbon burn off proceeds, up to a maximum of about 1 or 2% by volume, and typically not more than about 0.5% by volume.

Admixture of the reactivation product gases with the product effluent stream from the "on line" zones does not complicate product recovery. In a typical alkane dehydrogenation plant the product effluent composition typically contains a small amount of carbon oxides (e.g. about 1.3% by volume) in addition to steam, hydrogen and hydrocarbons. The reactivation gas effluent, on the other hand, will contain typically a small amount of carbon oxides and nitrogen as well as steam and possibly also a small amount of oxygen. Although the volume of the combined streams is thereby increased, the major additional component is steam so that the only significant change to a conventional product recovery section that is required is an increase in size of the usual heat recovery and steam condensation system. The increase in carbon oxides content is small (e.g. an increase from about 1.3% in the product effluent stream to about 1.4% in the combined gas stream), whilst the presence of nitrogen does not introduce any complications into the product recovery procedure. As the volume flow rate of reactivation product gases is relatively small in comparison with the volume flow rate of the product effluent stream, there is no risk of explosion as the oxygen content of the reactivation product gas stream is low (typically less than 2% by volume) even at the end of carbon burn off and there is a large proportion of steam present to prevent the oxygen level from reaching the explosive limit in any event. Laboratory experiments have shown that at the exit temperatures and pressures typically used, over 90% of any residual oxygen in the reactivation gases effluent is rapidly consumed following admixture of the two streams, presumably due to reaction with hydrogen present in the product effluent stream, so that the oxygen content of the combined stream has usually dropped to less than about 200 ppm before condensation of the steam commences.

Although the illustrated reactor illustrates the presence of a combustion air fan i and of a flue gas fan gg, it will be appreciated that other designs are possible in which one or both of these items is or are omitted. In an alternative design the exhaust gas stream from a gas turbine is used as the source of combustion air.

In view of the multiple sequential operation that will be required to operate a reactor constructed according to the invention, it will usually be desirable to control at least a significant part of the operation of the reactor of the invention with the aid of a programmable controller or computer.

Besides the features already mentioned, other relevant factors that a designer will need to take into account include particle size and geometry of the catalyst, space velocity, tube diameter, tube length, pressure drop, conversion per pass, selectivity, operating pressure, operating temperature, and cycle time to mention but a few.

0135357

-19-

<u>CLAIMS</u>

1.      A reactor for continuous operation of an endothermic catalytic process in which the catalyst requires periodic reactivation comprising:

firebox means defining a furnace firebox comprising a series of firebox zones;

a plurality of catalyst containing tubes extending through each firebox zone;

inlet header means corresponding to each firebox zone and connected to the inlet end of each tube of that firebox zone for the admission of a reactant or reactants, on the one hand, in a production part of the operating cycle and for the admission of a reactivation medium, on the other hand, in a reactivation part of the operating cycle;

reactant supply means for supplying one or more reactants to the catalyst containing tubes;

reactivation medium supply means for supplying reactivation medium to the catalyst containing tubes;

individually operable flow control means corresponding to each firebox zone for controlling the supply of reactant or reactants, on the one hand, and of reactivation medium, on the other hand, to the tubes of that firebox zone;

product collection means connected to the outlet ends of the tubes for collecting in a common outlet stream material exiting tubes of all the zones including both tubes which are at any given time in a production part of the operating cycle and tubes which are in the reactivation part of the operating cycle;

firebox burner means corresponding to each firebox zone for heating the tubes thereof;

fuel supply means for supplying fuel to each firebox burner means;

combustion air supply means for supplying combustion air to each firebox zone; and

individually operable fuel supply control means corresponding to each firebox zone for controlling the supply of fuel to the firebox burner means thereof;

whereby, in use, the reactor may be continuously operated in a sequential pattern of operation in which, at any given time, reactant or reactants is or are supplied to the tubes of at least a majority of the firebox zones in a production part of the operating cycle for such zones, whilst reactivation medium is simultaneously supplied to the tubes of at most a minority of the firebox zones in a reactivation part of the operating cycle for such zone or zones, the rate of fuel supply to the individual firebox zones being individually controllable so as to provide the requisite heat input thereto during the reactivation and production part of the respective operating cycle for each zone; and

whereby the catalyst in the tubes of each firebox zone can be subjected alternately to reactivation conditions and to production conditions, the maximum ratio of the number of tubes throughout the reactor at a given time in the reactivation part of their respective operating cycles to the number of tubes throughout the reactor at that time in the production part of their respective cycles being selected in dependence on the rate of deactivation of the catalyst under the chosen production conditions.

2. A reactor according to claim 1, in which the furnace firebox comprises from 3 to 24 firebox zones.

3. A reactor according to claim 1 or claim 2, in which the furnace firebox comprises from 4 to 12 firebox zones.

4.      A reactor according to any one of claims 1 to 3, in which an inlet portion of each of the tubes is devoid of catalyst so as to provide a preheating tube portion upstream from the catalyst bed of that tube.

5.      A reactor according to any one of claims 1 to 4 further including:   .

preheater means defining a preheater section comprising a plurality of preheater zones, each corresponding to a respective firebox zone;

a plurality of preheater coils, each in a respective preheater zone and connected to the inlet header means of the corresponding firebox zone;

preheater burner means corresponding to each preheater zone for heating the preheater coil thereof;

subsidiary fuel supply means for supplying fuel to the preheater burner means of each preheater zone;

preheater combustion air supply means for supplying combustion air to the preheater zones; and

individually operable preheater fuel supply means for controlling the supply of fuel to each preheater zone for regulating the heat input to the respective preheater coil.

6.      A reactor according to claim 5, in which the reactivation medium supply means is arranged to supply reactivation medium required for reactivation of the catalyst of the selected firebox zone or zones to the upstream end of the corresponding preheater tube or tubes.